Europäisches Patentamt

European Patent Office

Office européen des brevets

(11) Veröffentlichungsnummer: **0 359 166**
**A2**

# EUROPÄISCHE PATENTANMELDUNG

(21) Anmeldenummer: 89116737.1

(51) Int. Cl.5: **G02B 6/12**

(22) Anmeldetag: 09.09.89

(30) Priorität: 15.09.88 DE 3831345

(43) Veröffentlichungstag der Anmeldung:
21.03.90 Patentblatt 90/12

(84) Benannte Vertragsstaaten:
**CH DE FR GB LI**

(71) Anmelder: **Firma Carl Zeiss**

**D-7920 Heidenheim (Brenz)(DE)**
(84) **CH DE FR LI**

Anmelder: **CARL-ZEISS-STIFTUNG trading as CARL ZEISS**

**D-7920 Heidenheim (Brenz)(DE)**
(84) **GB**

(72) Erfinder: **Reule, Alfred, Dr.**
**Kantstrasse 22**
**D-7080 Aalen(DE)**
Erfinder: **Bittner, Reinhold**
**Im Wörth 15**
**D-7070 Schwäbisch Gmünd-Weiler(DE)**
Erfinder: **Henneberg, Peter, Dr.**
**Mantelhof 25**
**D-7080 Aalen(DE)**
Erfinder: **Dorsel, Andreas, Dr.**
**Eulenweg 3**
**D-7080 Aalen(DE)**
Erfinder: **Heidemann, Klaus F., Dr.**
**Gaussweg 12**
**D-7082 Oberkochen(DE)**

(54) Verfahren zum Herstellen von abbildenden optischen Elementen in planaren Wellenleitern.

(57) Zur Herstellung von abbildenden optischen Elementen in einem planaren Wellenleiter werden durch Ionenätzen in Verbindung mit einer lithographischen Maskentechnik Vertiefungen (15,25,35) erzeugt, von denen jeweils eine Seitenfläche (15f,25f,35f) als reflektierende und abbildende Fläche verwendet wird.

Fig. 1

## Verfahren zum Herstellen von abbildenden optischen Elementen in planaren Wellenleitern

Die vorliegende Erfindung betrifft ein Verfahren zum Herstellen von abbildenden optischen Elementen in einem planaren Wellenleiter, wobei die optischen Elemente aus Flächen bestehen, die senkrecht zur Ebene des Wellenleiters angeordnet sind.

Abbildende optische Elemente in Wellenleitern sind z.B. aus der US-PS 4 547 262 bekannt. Dort ist die Herstellung von Linsen, Prismen, Gittern und Spiegeln durch Protonenaustausch beschrieben, der mit Hilfe einer photolithographischen Maskentechnik in Lithiumniobat eine Änderung der Brechzahl bewirkt. Mit diesem Verfahren lassen sich jedoch nur Bereiche mit einer verhältnismäßig geringen Brechzahländerung erzeugen, so daß die optischen Elemente eine sehr große Ausdehnung erhalten.

Eine recht gute Abbildung in Wellenleitern kann man mit sog. "geodätischen Linsen" erreichen, die z.B. aus der DE-OS 2 931 548 und US-PS 4 403 825 bekannt sind. Die Herstellung derartiger Linsen ist jedoch umständlich und damit teuer, so daß sie für die Herstellung großer Stückzahlen nicht geeignet ist. Ihre Orientierung zu anderen optischen Bauteilen ist schwierig oder aufwendig.

Aus der EP-B1-0 050 545 ist ferner ein Verfahren zur Herstellung einer Fresnel-Linse in einem Wellenleiter aus Lithiumniobat bekannt, bei der sich eine verhältnismäßig kurze Dicke erreichen läßt. Diese Linse zeigt jedoch eine chromatische Aberration und hat schlechte Abbildungseigenschaften außerhalb der optischen Achse.

Es sind auch reflektierende, abbildenden Flächen z.B. aus der Veröffentlichung von E. Voges (IOOC 1983, Tokio, 29A1-5) bekannt. Dort sind Multiplexer und Demultiplexer mit Reflexions gittern beschrieben, welche an Kantenflächen angesetzt sind, die durch eine gemeinsame Bearbeitung von Wellenleiter und Substrat hergestellt wurden. Auf entsprechende Art können selbstverständlich auch lediglich reflektierende Flächen hergestellt werden. Dieses Herstellungverfahren ist nicht nur aufwendig, sondern es ist auch schwierig, die Fläche in der richtigen Justierung zu den anderen optischen Elementen herzustellen.

Die Aufgabe der vorliegenden Erfindung ist, ein Verfahren zum Herstellen von abbildenden optischen Elementen in planaren Wellenleitern anzugeben, das eine preiswerte Produktion von optischen Elementen mit guten Abbildungseigenschaften ermöglicht.

Die gestellte Aufgabe wird erfindungsgemäß dadurch gelöst, daß die Flächen durch Ionenstrahlätzen in Verbindung mit einer lithographischen Maskentechnik als Seitenwände der durch das Ionenstrahlätzen in dem Wellenleiter erzeugten Vertiefungen hergestellt werden.

In einem besonders vorteilhaften Herstellungsverfahren wird der Wellenleiter in der Oberfläche einer Glasplatte mit dem bekannten Ionenaustauschverfahren hergestellt.

Weitere vorteilhafte Ausgestaltungen des Verfahrens gehen aus den Unteransprüchen und den Erläuterungen zu den Figuren hervor. Das Verfahren ist sowohl für Monomode- als auch für Multimode-Wellenleiter geeignet.

Die Ionenätzung ist z.B. aus einer Veröffentlichung von P. Buchmann e.a. (J.o. Lightwave Technology 3, 785 (1985)) bekannt, in der die Herstellung eines reflektierenden Spiegels für streifenförmige Wellenleiter beschrieben wird. Durch die streifenförmigen Wellenleiter erfolgt jedoch keine Abbildung und der Spiegel hat daher nur die Funktion einer Umlenkung einer ungeordneten Strahlung von einem streifenförmigen Wellen leiter in einen anderen.

Die Ionenätzung der Oberfläche von Glas ist aus einer Arbeit von R. Moshvezadeh (Applied Optics 26, 2501 (1987) bekannt. Dort wird jedoch nur eine Gitterstruktur in die Oberfläche des Wellenleiters geätzt, wobei die Gitterlinien parallel zur Ebene des Wellenleiters verlaufen, um entweder Strahlung aus dem Wellenleiter aus- bzw. einzukoppeln oder sie im Wellenleiter zu reflektieren.

Aus der EP-B1-0 149 270 ist ein Monomode-Wellenleiter bekannt, bei dem das parallel zur Wellenleiterebene verlaufende Gitter eine doppelt periodische Struktur hat. Auch in diesem Fall befindet sich die Gitterstruktur nur in der Oberfläche des Wellenleiters und ihre Wirkung beruht darauf, daß das Strahlenbündel an vielen Gitterfurchen nacheinander teilweise reflektiert wird und daß bei richtiger Dimensionierung der Gitterstruktur sich die einzelnen reflektierten Teilwellen in der gewünschten Weise addieren. Dabei wird durch die doppelte Gitterstruktur ein besonders guter Wirkungsgrad erreicht, allerdings mit einem großen Aufwand.

Die Erzeugung von Gittern mit Furchen senkrecht zu einem plattenförmigen Lichtleiter ist in der EP-PS 3 611 246 beschrieben. Hier wird mit Hilfe einer geeigneten Maske durch Röntgentiefenlithographie mit Synchrotronstrahlung ein plattenförmiger Lichtleiter hergestellt, bei dem eine Begrenzungsfläche als abbildendes Echelette-Gitter ausgebildet ist. Der plattenförmige Lichtleiter wird anschließend zwischen zwei Glasplatten geklebt. Auch diese Herstellung einer abbildenden Struktur ist sehr aufwendig und gibt keinen Hinweis auf das im folgenden beschriebene Verfahren.

Die Erfindung wird im folgenden anhand von in den Figuren 1 bis 3 dargestellten Beispielen beschrieben. Dabei zeigen

Fig. 1 eine perspektivische Darstellung einer parabelförmigen abbildenden Fläche in einem Wellenleiter;

Fig. 2 einen Schnitt durch eine abbildende Fläche bei einem "vergrabenen" Wellenleiter und

Fig. 3 einen Multiplexer oder Demultiplexer, bei dem die abbildende Fläche zusätzlich mit einer Gitterstruktur versehen ist.

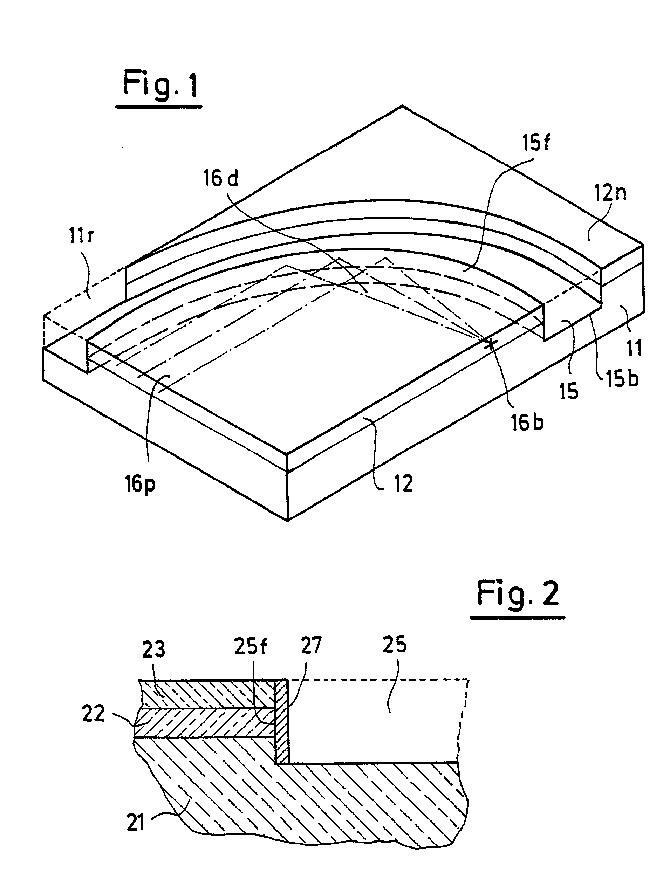

In Fig. 1 ist mit (11) ein Substrat bezeichnet, in dessen Oberfläche der planare Wellenleiter (12) z.B. durch Ionenaustausch erzeugt wurde. Als Substrat kann z.B. BK 7 (der Fa. Schott) verwendet werden, bei dem mit dem z.B. aus Veröffentlichungen von H.J. Lilienhof (Integrated Optics, Herausgeber H.P. Nolting e.a., Springer 1985, S. 71 ff.) oder T.G. Giallorenzi (Applied Optics 6, 1240 (1973)) bekannten Verfahren ein Wellenleiter mit einer Dicke von ca. 5 um für Monomode hergestellt wird. Die abbildende Fläche (15f) wird durch das, z.B. aus der weiter oben angegebenen Veröffentlichung von P. Buchmann, bekannte Verfahren der Ionenätzung in Verbindung mit einer Maskentechnik erzeugt. Dabei wird zunächst auf photo- oder elektronenlithographische Weise eine Maske hergestellt, welche den Bereich vorgibt, welcher durch Ionenätzung abgetragen werden soll. Auf den Wellenleiter wird eine Photolackschicht aufgebracht, welche durch die Maske belichtet wird. Je nach dem verwendeten Lack werden im nächsten Schritt die belichteten oder unbelichteten Gebiete abgelöst. Durch die Ionenätzung werden im letzten Schritt dann die nicht vom Lack geschützten Gebiete abgetragen, wobei diese Ionenätzung zweckmäßigerweise so lange durchgeführt wird, bis die Abtragung des Materials bis in das Substrat (11) hineingeht. Auf diese Weise entsteht die in Figur 1 mit (15) bezeichnete Vertiefung, welche auch bis an den Rand (11r) des Substrates gehen kann. Für die abbildenden Eigenschaften des in Figur 1 dargestellten Bauteiles ist von der Vertiefung (15) nur die Fläche (15f) wirksam. Die Breite (15b) der Vertiefung (15) wird zweckmäßigerweise so groß gemacht, daß keine Überkoppelung von Lichtwellen in den nicht genutzten Teil (12n) des Wellenleiters erfolgt.

Die Fläche (15f) kann durch eine entsprechende Ausbildung der Maske z.B. parabelförmig gekrümmt sein. In diesem Fall wird, wenn im Brennpunkt (16b) z.B. die Endfläche eines Lichtleiters angeordnet ist, das von ihr ausgehende divergente Strahlenbündel (16d) in das Parallelstrahlbündel (16p) verwandelt.

Selbstverständlich kann die abbildende Fläche auch einen elliptischen, kreisförmigen oder sonstigen Verlauf entsprechend den Erfordernissen der gewünschten Abbildung haben. Auch sind Bauteile möglich, bei denen mehrere abbildende Flächen verwendet werden, die dann, dadurch daß sie mit nur einer Maske hergestellt werden, sehr genau zueinander positioniert sind.

Wie in Figur 2 dargestellt, kann der Wellenleiter (22) auch als sogenannter "vergrabener" Wellenleiter ausgebildet sein. Bei dieser bekannten Technik wird z.B. in der Oberfläche des Substrates (21) durch Ionenaustausch zunächst eine Schicht erzeugt, die eine größere Brechzahl als das Substrat hat. Anschließend wird die Brechzahl in der oberflächennächsten Schicht (23) durch Ionenaustausch mit anderen Ionengemischen wieder auf einen kleineren Wert gebracht. Dadurch entsteht eine wellenleitende Schicht (22) die auf ihrer Ober- und Unterseite von Medien mit geringerer Brechzahl begrenzt ist und deswegen als "vergraben" bezeichnet wird. Derartige Wellenleiter haben weniger Verluste aufgrund von Störungen an der Oberfläche.

In dem in Figur 2 dargestellten Fall begrenzt die durch Ionenätzung hergestellte Fläche (25f) nicht nur den Wellenleiter (22), sondern auch die Deckschicht (23). Dadurch wird auch die (außerhalb des Wellenleiters (22) laufende) evaneszente Welle an der abbildenden Fläche reflektiert, so daß die Reflexionsverluste bei der Abbildung vermindert werden. Sowohl bei vergrabenen als auch bei nicht vergrabenen Wellenleitern kann das Reflexionsvermögen durch eine Spiegelschicht (27) erhöht werden, oder durch eine entsprechend gewählte Schicht in anderer Weise beeinflußt werden.

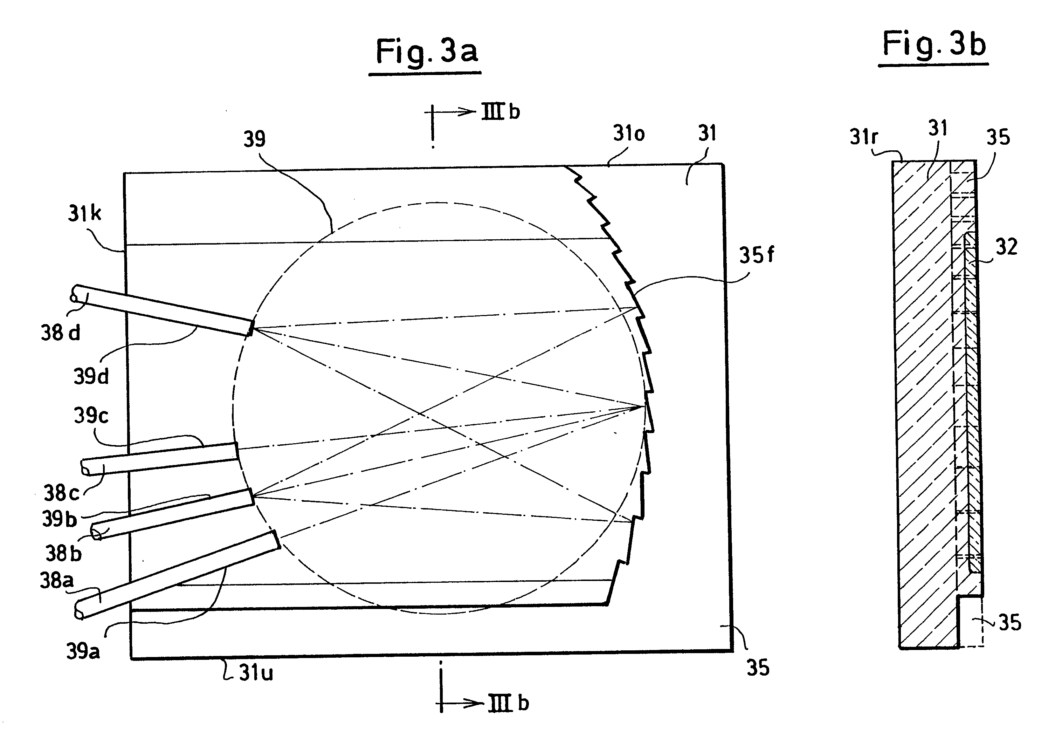

In dem in den Figuren 3a und b dargestellten Ausführungsbeispiel ist die abbildnede Fläche (35f) als Gitter ausgeführt. Dieses Gitter kann auch - wie in der Figur angedeutet - mit unterschiedlichen Furchenabständen und variablem Blazewinkel ausgeführt werden, was sowohl bei Spektrometern als auch bei Wellenlängenmultiplexern oder Demultiplexern vorteilhaft sein kann. Der Baustein besteht wieder aus dem Substrat (31) und der wellenleitenden Schicht (32), die - wie der Schnitt 3b zeigt -nicht an allen Stellen bis an den Rand (31r) des Substrates gehen muß. Die Zu- und Abführung der Strahlung erfolgt in diesem Beispiel mit den Lichtleitern (38a,38b,38c,38d), deren Endflächen z.B. auf dem bekannten Rowlandkreis (39) angeordnet sind. In diesem Fall wird durch Ionenstrahlätzen die Fläche (35) abgetragen und damit durch eine entsprechende Ausbildung der Maske die abbildende Gitterfläche (35f) erzeugt. Die seitlichen Begrenzungen des nicht abgetragenen Bereiches können auf unterschiedliche Art erfolgen. Auf der mit (31o) bezeichneten Seite fällt die Begrenzung mit dem Rand des Substrates (31) zusammen; auf der mit (31u) bezeichneten Seite erfolgt die Begrenzung durch die Maske.

Die Anschlüsse für die Lichtleiter (38a,38b,38c,38d) können auf verschiedene Arten hergestellt werden. Entweder werden durch lonenätzen im Wellenleiter (32) und im Substrat (31) entsprechend tiefe Ausschnitte (39a,39b,39c,39d) hergestellt, wobei die übrigen Flächen durch eine entsprechend dicke Schutzschicht abgedeckt sind. Oder es wird das Substrat (31) mit dem Wellenleiter (32) auf der linken Seite bis zum Rowlandkreis (39) mechanisch abgetragen und an die anschließend optisch polierte Fläche werden die Lichtleiter so angekittet, wie das in der DE-OS 35 09 132 beschrieben ist. Eine weitere Möglichkeit besteht darin, (39a,39b,39c,39d) als Streifenwellenleiter herzustellen und die Lichtleiter (38a,38b,38c,38d) an der Kante (31k) anzukoppeln.

## Ansprüche

1. Verfahren zum Herstellen von abbildenden optischen Elementen in einem planaren Wellenleiter, wobei die optischen Elemente aus reflektierenden Flächen bestehen, die senkrecht zur Ebene des Wellenleiters angeordnet sind, dadurch gekennzeichnet, daß die Flächen durch Ionenstrahlätzen in Verbindung mit einer lithographischen Maskentechnik als Seitenwände (15f,25f,35f) der durch das Ionenätzen in den Wellenleiter erzeugten Vertiefungen (15,25,35) hergestellt werden.

2. Verfahren nach Anspruch 1, dadurch gekennzeichnet, daß der Wellenleiter (12,22,32) in der Oberfläche einer Glasplatte durch Ionenaustausch hergestellt wird.

3. Verfahren nach Anspruch 1 oder 2, dadurch gekennzeichnet, daß der Wellenleiter vor dem Ionenstrahlätzen durch eine Schicht (23) mit kleinerer Brechzahl auf seiner Oberfläche "vergraben" wird.

4. Verfahren nach einem der Ansprüche 1 bis 3, dadurch gekennzeichnet, daß in den Wellenleiter Anschlüsse (39a,39b,39c,39d) für Lichtleitfasern (38a,38b,38c,38d) eingearbeitet werden.

5. Verfahren nach einem der Ansprüche 1 bis 4, dadurch gekennzeichnet, daß die Fläche (35f) mit einer Gitterstruktur versehen wird, deren Furchen senkrecht zur Ebene des Wellenleiters (32) laufen.

6. Verfahren nach Anspruch 5, dadurch gekennzeichnet, daß die Gitterstruktur (35f) mit einem Blazewinkel hergestellt wird.

7 Verfahren nach Anspruch 6, dadurch gekennzeichnet, daß Furchenabstand und Blazewinkel in den verschiedenen Bereichen der Fläche (35f) unterschiedlich hergestellt werden.

8. Verfahren nach einem der Ansprüche 1 bis 7, dadurch gekennzeichnet, daß auf die Fläche (15f,25f,35f) eine mindestens teilweise reflektierende Schicht (27) aufgebracht wird.

9. Verfahren nach einem der Ansprüche 1 bis 8, dadurch gekennzeichnet, daß die Fläche (15f,25f,35f) mit einem nicht kreisförmigen Verlauf Form in der Ebene des Wellenleiters (12,22,32) hergestellt wird.

10. Verfahren nach einem der Ansprüche 1 bis 9, dadurch gekennzeichnet, daß die Fläche von der optischen Strahlung mindestens teilweise unter einem Winkel beaufschlagt wird, der größer ist als der Grenzwinkel der Totalreflexion.

## Fig. 1

## Fig. 2

Fig. 3a

Fig. 3b